# EUROPEAN PATENT APPLICATION

(11) **EP 1 804 391 A1**
(43) Date of publication of application: **04.07.2007**
(21) Application number: 05800416.9
(22) Date of filing: 07.11.2005
(51) Int. Cl.: H04B 1/707, H04J 11/00, H04L 27/00

(54) **RADIO TRANSMITTER AND PILOT SIGNAL INSERTING METHOD**

(30) Priority: 08.11.2004 JP 2004323868
(71) Applicant: MATSUSHITA ELECTRIC INDUSTRIAL CO., LTD., Osaka 571-8501 (JP)
(72) Inventor: YOSHII, Isamu, Matsushita Electric Industrial Co.,Ltd., Chuo-ku, Osaka 540-6319 (JP); FUKUOKA, Masaru, Matsushita Electric Industrial Co.,Ltd., Chuo-ku, Osaka 540-6319 (JP); WENGERTER, Christian, Matsushita Electric Industrial Co.,Ltd., Chuo-ku, Osaka 540-6319 (JP); NISHIO, Akihiko, Matsushita Electric Industrial Co.,Ltd., Chuo-ku, Osaka 540-6319 (JP); MIYOSHI, Kenichi, Matsushita Electric Industrial Co.,Ltd., Chuo-ku, Osaka 540-6319 (JP)
(74) Representative: Grünecker, Kinkeldey, Stockmair & Schwanhäusser Anwaltssozietät
(86) International application number: PCT/JP2005/020379
(87) International publication number: WO 2006/049282

(57) **Abstract**

A radio transmitter and a pilot signal inserting method are provided for improving throughput. In the radio transmitter, an MCS deciding part (106) selects one of a plurality of modulating systems. An information generating part (108) decides an inserting position of a pilot signal corresponding to the selected modulating system. A modulating part (116) modulates a data signal by the selected modulating system. A signal arranging part (118) inserts the pilot signal into the modulated data signal and changes the inserting position of the pilot signal corresponding to the selected modulating system. A transmission RF part (124) transmits the data signal wherein the pilot signal is inserted.

## Description

### Technical Field

The present invention relates to a radio transmission apparatus and pilot signal insertion method used in a radio communication system that performs channel estimation using a pilot signal.

### Background Art

In a radio communication system, there is a case where a radio transmission apparatus inserts (multiplexes) a pilot signal in a data signal and transmits the data signal to a radio reception apparatus (see Patent Document 1, for example). In this case, the radio reception apparatus performs channel estimation using the received pilot signal, and, after performing channel compensation based on the result, demodulates the received data signal.

Further, in a radio communication system that adaptively selects a modulation scheme to be used for demodulating a data signal from a plurality of modulation schemes, a radio reception apparatus, for example, reports channel quality information to a radio transmission apparatus, and the radio transmission apparatus selects a modulation scheme based on the channel quality information.
Patent Document 1: Japanese Patent Application Laid-open No.2001-197037

### Disclosure of the Invention

### Problems to be Solved by the Invention

However, in a conventional radio communication system, the level required for channel estimation accuracy differs according to a modulation scheme. In other words, the pilot signal insertion interval (or insertion amount) required for obtaining channel estimation accuracy of a fixed level or higher differs according to a modulation scheme. As a result, for example, when a common pilot signal is inserted at the narrowest insertion interval in order to obtain a fixed level or higher channel estimation accuracy at a radio reception apparatus that uses a modulation scheme requiring the narrowest insertion interval in a plurality of modulation schemes, for a radio reception apparatus that uses a modulation scheme different from that modulation scheme, an excessive amount of pilot signal is transmitted. As a result, there is a fixed limit to throughput improvement.

The present invention has been implemented taking into consideration the problems described above, and it is therefore an object of the present invention to provide a radio transmission apparatus and pilot signal insertion method capable of improving throughput.

### Means for Solving the Problem

The radio transmission apparatus of the present invention employs a configuration having: a modulation section that modulates a data signal using a modulation scheme selected from a plurality of modulation schemes; an insertion section that inserts a pilot signal in the modulated data signal and changes an insertion position of the pilot signal according to the selected modulation scheme; and a transmission section that transmits the data signal in which the pilot signal is inserted.

The pilot signal insertion method of the present invention inserts a pilot signal in a data signal modulated using a modulation scheme selected from a plurality of modulation schemes and changes the insertion position of the pilot signal according to the selected modulation scheme.

### Advantageous Effect of the Invention

Accordingto the present invention, it ispossible to improve throughput.

### Brief Description of Drawings

FIG.1 is a block diagram showing the configuration of a base station according to an embodiment of the present invention;
FIG.2 is a block diagram showing the configuration of a mobile station according to an embodiment of the present invention;
FIG.3 is a flowchart explaining the operation of a radio communication system according to an embodiment of the present invention;
FIG.4 shows an example of a pilot configuration according to an embodiment of the present invention;
FIG. 5 shows another example of a pilot configuration according to an embodiment of the present invention;
FIG.6 explains transmission/reception operation according to an embodiment of the present invention;
FIG.7 shows a modified example of a pilot configuration according to an embodiment of the present invention;
FIG.8 shows another modified example of a pilot configuration according to an embodiment of the present invention;
FIG.9 shows an example of a pilot arrangement determination method based on delay spread according to an embodiment of the present invention;
FIG.10 shows another example of a pilot arrangement determination method based on delay spread according to an embodiment of the present invention;
FIG.11 shows an example of a pilot arrangement determination method based on Doppler frequency according to an embodiment of the present invention; and
FIG.12 shows another example of a pilot arrangement determination method based on Doppler frequency according to an embodiment of the present invention.

### Best Mode for Carrying Out the Invention

Embodiments of the present invention will now be described in detail with reference to the accompanying drawings.

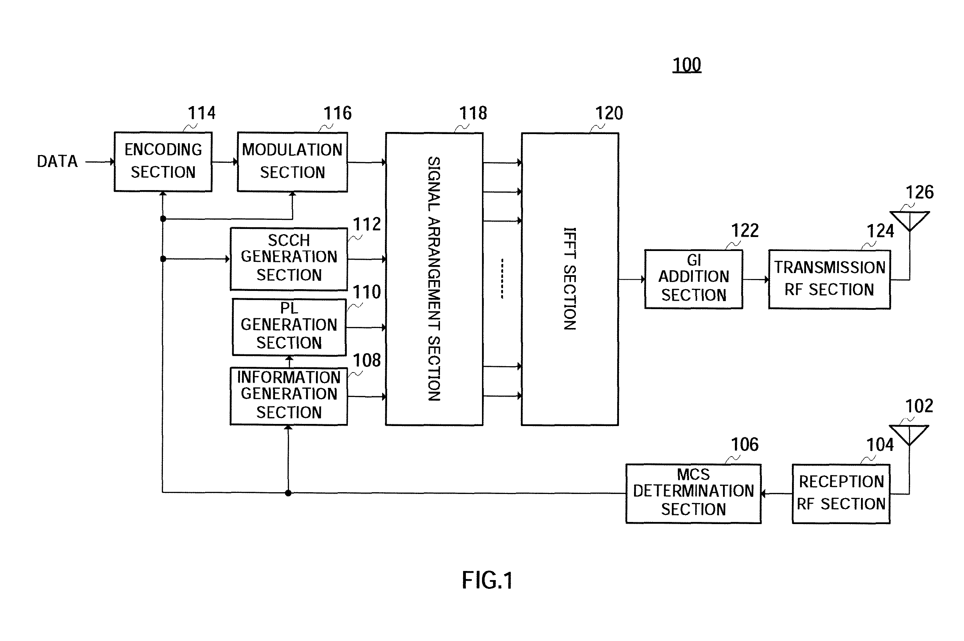

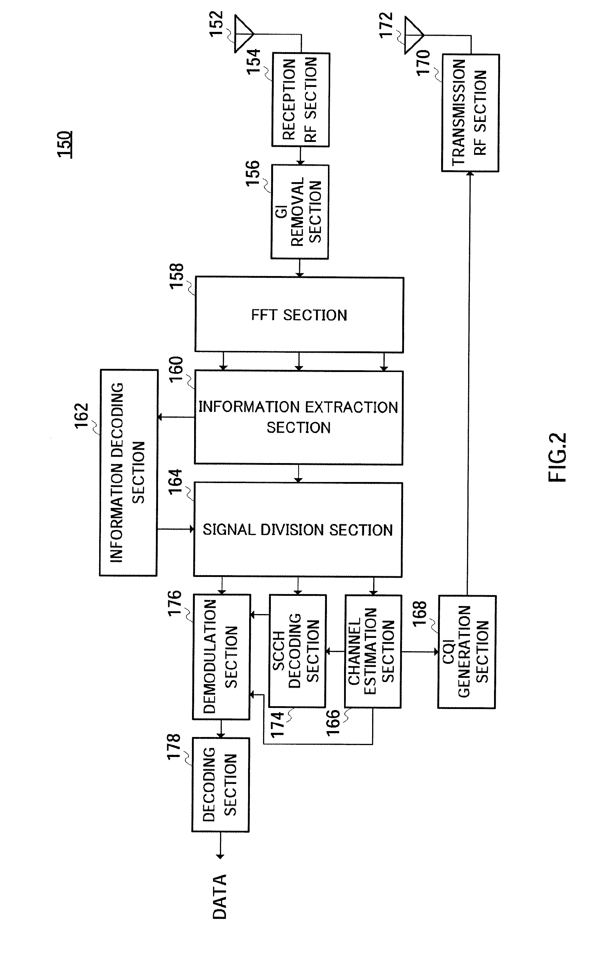

FIG. 1 is a block diagram showing a configuration of a base station apparatus (hereinafter "base station") that applies a radio transmission apparatus according to an embodiment of the present invention. FIG.2 is a block diagram showing a configuration of a mobile station apparatus (hereinafter "mobile station") that applies a radio reception apparatus according to an embodiment of the present invention.

Base station 100 of FIG.1 has antenna 102, reception RF section 104, MCS determination section 106, information generation section 108, PL generation section 110, SCCH generation section 112, encoding section 114, modulation section 116, signal arrangement section 118, IFFT section 120, GI addition section 122, transmission RF section 124 and antenna 126.

Reception RF section 104 receives the signal transmitted from mobile station 150 of FIG.2 via antenna 102 and performs predetermined reception RF processing such as down-conversion or A/D conversion on the received signal. The signal subjected to reception RF processing is outputted to MCS determination section 106.

MCS determination section 106 extracts the channel quality indicator (CQI) described later from the inputted signal, and determines the MCS (such as modulation scheme and coding rate) according to the extracted CQI. More specifically, MCS determination section 106 determines the modulation scheme by selecting an optimum modulation scheme for the present downlink channel quality from a plurality of modulation schemes. The determined MCS is outputted to information generation section 108, SCCH generation section 112, encoding section 114 and modulation section 116. This channel quality information may be indicated as CSI.

Information generation section 108 determines the configuration (the insertion interval or insertion amount, for example) of the pilot signal (hereinafter "pilot") to be inserted in the data signal (hereinafter "data") to be transmitted, based on the inputted MCS. When the selected modulation scheme is changed, for example, information generation section 108 changes the pilot configuration so that the insertion position of the pilot to be inserted in the data by signal arrangement section 118 is changed. Then, information generation section 108 generates and outputs the pilot configuration information indicating the configuration to PL generation section 110 and signal arrangement section 118. The pilot configuration information may clearly indicate the pilot configuration or only the changed part of the pilot configuration.

PL generation section 110 generates a pilot according to the inputted pilot configuration information, and outputs the pilot to signal arrangement section 118.

SCCH generation section 112 generates and outputs to signal arrangement section 118 the SCCH (Shared Control Channel) for reporting the inputted MCS to mobile station 150 which is the data transmission destination.

Encoding section 114 encodes the data at the coding rate determined by MCS determination section 106. Modulation section 116 modulates the encoded data using the modulation scheme determined by MCS determination section 106. The modulated data is outputted to signal arrangement section 118.

Signal arrangement section 118, as insertion means, arranges the inputted data, SCCH and pilot according to the pilot configuration indicated in the inputted pilot configuration information. The above-described signals are arranged in a domain made up of a frequency axis and time axis. By this means, the pilot is inserted in the data. The signal subjected to arrangement processing is outputted to IFFT section 120.

IFFT section 120 performs IFFT (Inverse Fast Fourier Transform) processing on the inputted signal. GI addition section 122 adds a GI (Guard Interval) in a predetermined position of the signal subjected to IFFT processing. Transmission RF section 124 performs predetermined transmission RF processing such as D/A conversion and up-conversion on the signal to which GI is added, and transmits the signal subjected to transmission RF processing via antenna 126.

Mobile station 150 of FIG.2 has antenna 152, reception RF section 154, GI removal section 156, FFT section 158, information extraction section 160, information decoding section 162, signal division section 164, channel estimation section 166, CQI generation section 168, transmission RF section 170, antenna 172, SCCH decoding section 174, demodulation section 176 and decoding section 178.

Reception RF section 154 receives the signal transmitted from base station 100 via antenna 152, performs predetermined reception RF processing such as down-conversion andA/D conversion on the received signal, and outputs the signal subjected to reception RF processing to GI removal section 156. GI removal section 156 removes the GI inserted in a predetermined position of the inputted signal and outputs the signal after GI removal to FFT section 158. FFT section 158 performs FFT (Fast Fourier Transform) processing on the signal after GI removal, and outputs the signal subjected to FFT processing to information extraction section 160.

Information extraction section 160 outputs the signal subjected to FFT processing to signal division section 164, extracts the portion where the pilot configuration information is arranged from the signal subjected to FFT processing, and outputs that portion to information decoding section 162.

Information decoding section 162 decodes the inputted signal to obtain the pilot configuration information. The obtained pilot configuration information is outputted to signal division section 164.

Signal division section 164 divides the signal subjected to FFT processing into portions where the data, SCCH, and pilot are respectively arranged according to the inputted pilot configuration information.

Channel estimation section 166 performs channel estimation using the signal of the portion where the pilot is arranged. The channel quality obtained as a result of channel estimation is reported to CQI generation section 168, SCCH decoding section 174 and demodulation section 176.

CQI generation section 168 generates and outputs the CQI indicating the reported channel quality to transmission RF section 170.

SCCH decoding section 174 decodes the signal of the portion where SCCH is arranged while performing channel compensation based on the reported channel quality. Demodulation section 176 demodulates the signal of the portion where the data is arranged according to the modulation scheme indicated by the decoded SCCH while performing channel compensation based on the reported channel quality. Decoding section 178 decodes the demodulated data.

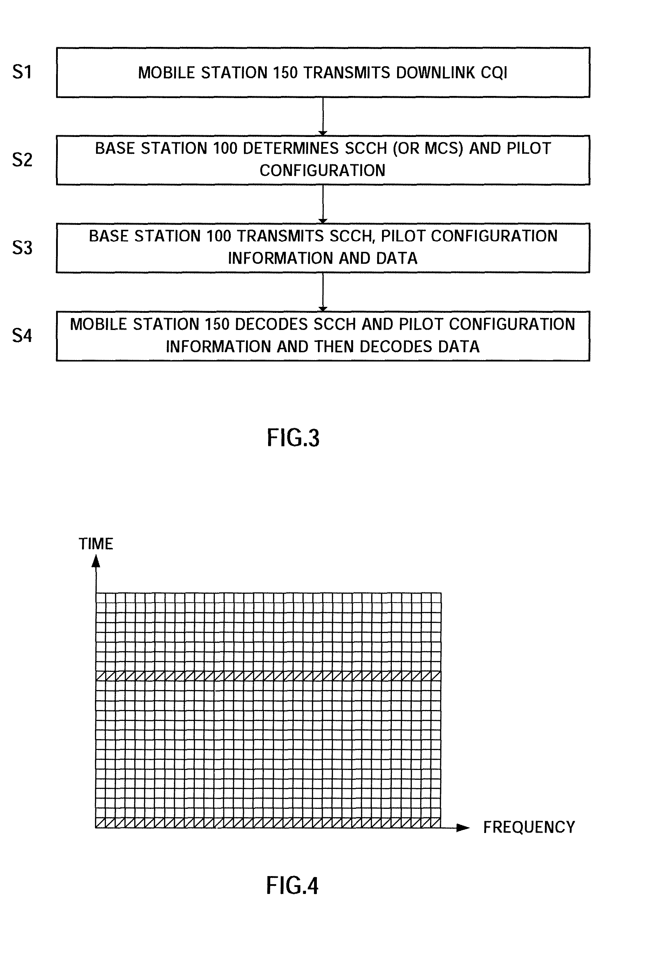

Next, the operation of the radio communication system having base station 100 and mobile station 150 having the above-described configuration will be described. FIG.3 is a flowchart explaining the operation of a radio communication system.

First, mobile station 150 transmits the downlink CQI (S1) to base station 100. Base station 100 that receives the CQI determines the SCCH (or MCS) and pilot configuration (S2).

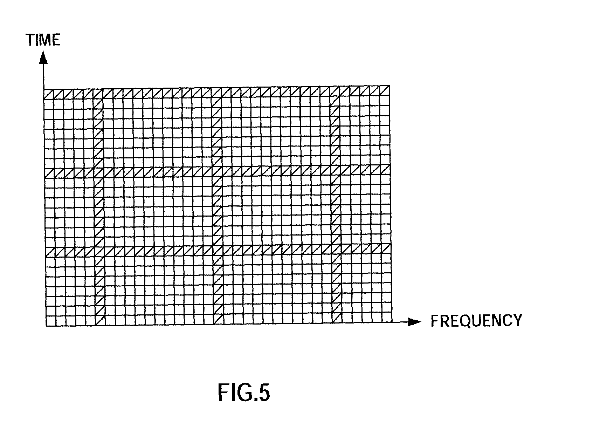

Then, signal arrangement section 118 of base station 100 inserts the pilot in the data according to the determined pilot configuration. Examples of pilot configurations are given in FIG.4 and FIG.5. FIG.4 shows a pilot configuration for a case where the modulation scheme is QPSK (Quadrature Phase Shift Keying), and FIG. 5 shows a pilot configuration for a case where the modulation scheme is 16QAM (16 Quadrature Amplitude Modulation).

In the case of QPSK where the M-ary number is less than that of 16QAM, the pilot insertion interval on the time axis is narrower that that of 16QAM. Further, pilot insertion is not performed on the frequency axis in the case of QPSK, but pilots are inserted at a predetermined interval on the frequency axis in the case of 16QAM. Further, the pilot insertion amount is greater for 16QAM compared to QPSK. That is, signal arrangement section 188 changes the pilot insertion position according to the selected modulation scheme.

After the pilot is inserted in the data, base station 100 transmits the SCCH, pilot configuration information and data (S3). Furthermore, SCCH transmission may be performed at a fixed cycle or at a variable cycle. Mobile station 150 that receives each signal decodes the SCCH and pilot configuration information and then decodes the data (S4).

In accordance with the above-described operation, transmission and reception are performed between base station 100 and mobile station 150 following the procedure below.

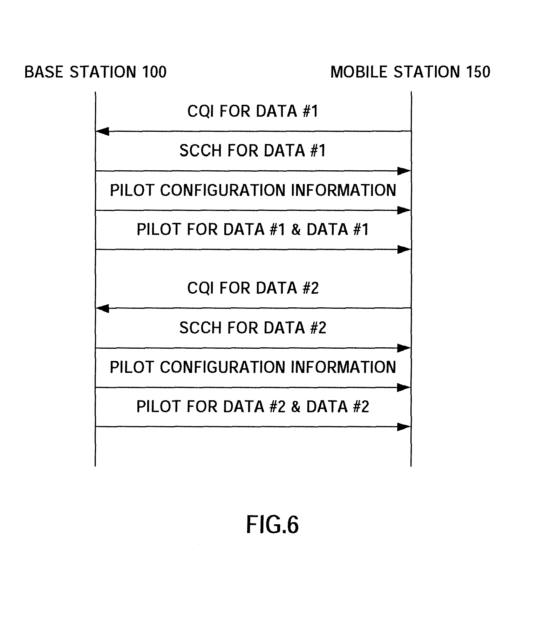

As shown in FIG.6, CQI is transmitted from mobile station 150. This CQI is used for transmission control of data #1 in base station 100. That is, base station 100 transmits the SCCH generated based on the CQI for data #1, then transmits the pilot configuration information generated based on the CQI for data #1, and then transmits the pilot generated based on the pilot configuration information along with data #1.

Next, mobile station 150 performs channel estimation using the received pilot. The CQI generated based on the channel estimation result is then transmitted. This CQI is used for the transmission control of data #2 in base station 100. That is, base station 100 transmits the SCCH generated based on the CQI for data #2, then transmits the pilot configuration information generated based on the CQI for data #2, and then transmits the pilot generated based on the pilot configuration information along with data #2.

In this way, according to this embodiment, the pilot insertion position--insertion interval or insertion amount--is changed based on the modulation scheme and channel quality, so that it is possible to transmit a required and sufficient amount of pilot signal on a per modulation scheme basis to mobile station 150 and improve throughput. Further, mobile station 150 extracts a pilot according to the pilot insertion position indicated in the received pilot configuration information.

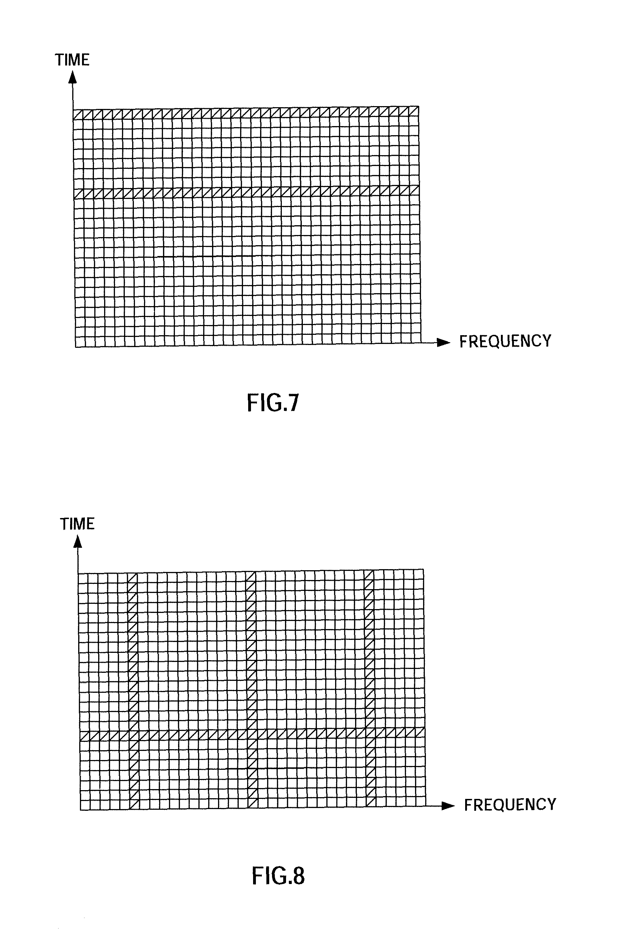

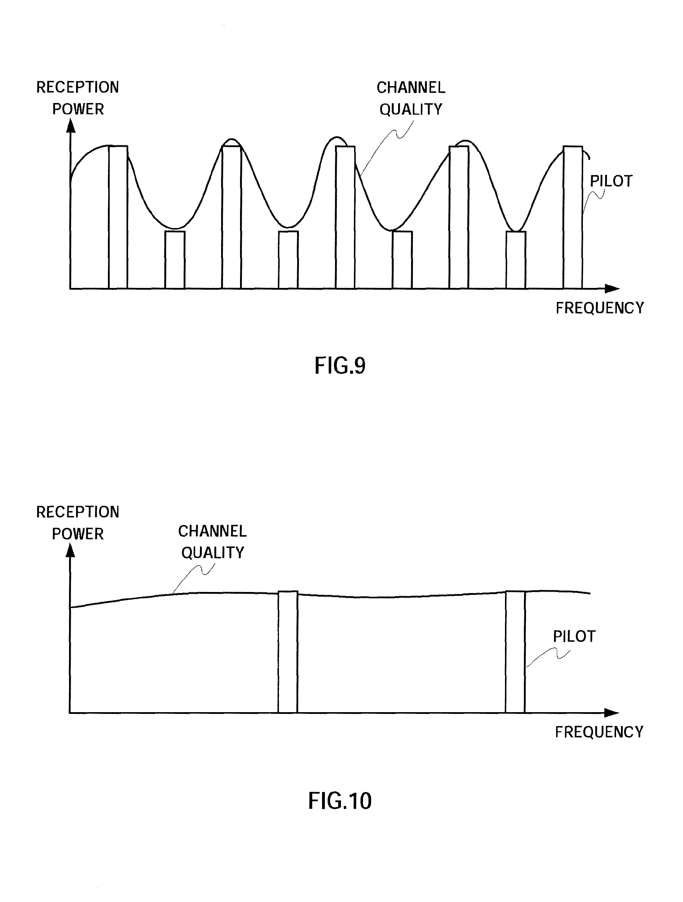

Furthermore, the pilot configuration of this embodiment is not limited to the above-described configuration. For example, the pilot configuration corresponding to the modulation scheme may be realized by combining a common pilot configuration and a dedicated pilot configuration. For example, as shown in FIG.7, the pilot configuration corresponding to a modulation scheme having a minimum M-ary number is realized by inserting only a common pilot. Then, as shown in FIG.8, the pilot configuration corresponding to a modulation scheme with a large M-ary number compared to the modulation scheme, is realized by additional insertion of a dedicated pilot. In this case, the pilot configuration information may indicate only the additional insertion position.

Further, the pilot configuration determined by information generation section 108 may be adaptively determined according to the channel quality. For example, when the delay spread is large, as shown in FIG.9, the channel quality fluctuation in the frequency direction is severe. Thus, the pilot configuration is determined so that the pilot insertion interval on the frequency axis becomes narrow according to the degree of fluctuation, and propagation path estimation is made to follow that fluctuation. On the other hand, when the delay spread is small, as shown in FIG.10, fluctuation of the channel quality in the frequency direction is small. Thus, the pilot configuration is determined so that the pilot insertion interval on the frequency axis expands according to the degree of fluctuation, and the transmission amount of data is increased.

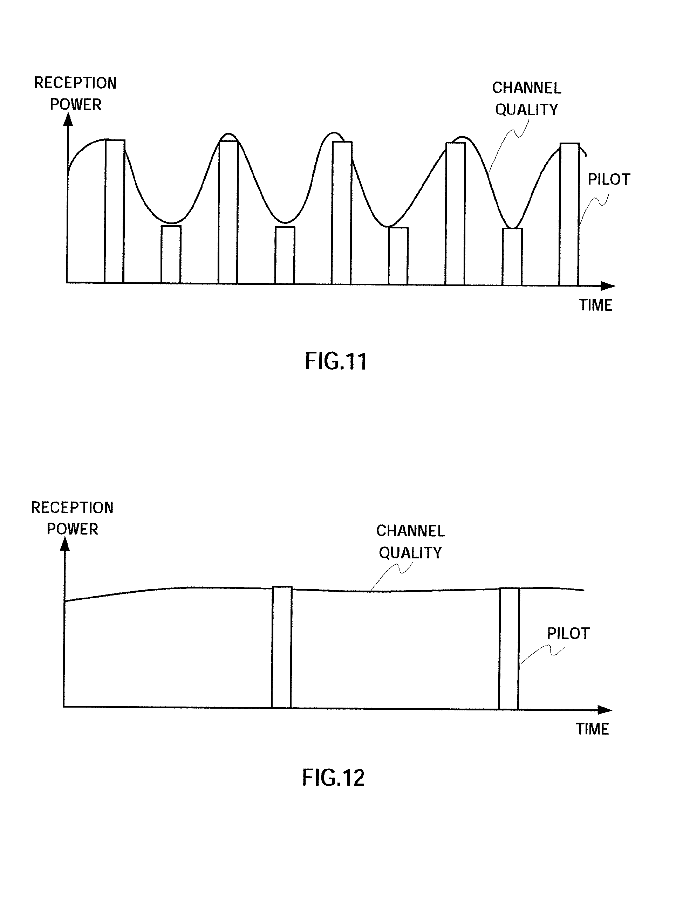

Furthermore, for example, when the Doppler frequency is high, as shown in FIG.11, fluctuation of the channel quality in the time direction is severe. Thus, the pilot configuration is determined so that the pilot insertion interval on the time axis becomes narrow according to the degree of fluctuation, and propagation path estimation is made to follow that fluctuation. On the other hand, when the Doppler frequency is low, as shown in FIG.12, fluctuation of the channel quality in the time direction is small. Thus, the pilot configuration is determined so that the pilot insertion interval on the frequency axis expands according to the degree of fluctuation, and the amount of data transmission is increased.

Further, the pilot configuration information of this embodiment is information for individually reporting the pilot configuration to a specific mobile station. However, in the case of a scheduling system, for example, all mobile stations that perform radio communication with base station 100 may be designed to decode the pilot configuration information addressed to each mobile station. In this case, signal arrangement section 118 inserts pilots so that a dedicated pilot is transmitted to a plurality of mobile stations in time division (for example, in the order of mobile station # 1 →mobile station #2 → mobile station #3 → mobile station #1). On the other hand, for example, in mobile station #1, the pilot configuration information for mobile station #2 and mobile station #3, as well as the pilot configuration information for mobile station #1 are decoded. Then, mobile station #1 performs channel estimation using the pilots respectively assigned to mobile stations #1 to #3. Thus, it is possible to improve the channel estimation accuracy.

In this embodiment, the case has been described where the pilot configuration is changed over the entire communication band, but the pilot configuration may also be changed per subcarrier block comprised of a plurality of subcarriers. In addition, a subcarrier is sometimes indicated as tone.

Further, when a MIMO (Multiple-Input Multiple-Output) - OFDM scheme is applied to base station 100, an axis in the spatial direction is increased. In this case, the pilot configuration is realized by combining a common pilot configuration and a dedicated pilot configuration. Then, the common pilot stream is space-divided. The mobile station performs channel estimation using the space-divided common pilot and dedicated pilot.

Further, the radio transmission apparatus according to this embodiment may be applied to a mobile station, and the radio reception apparatus according to this embodiment may be applied to a base station. Furthermore, the base station and mobile station in this embodiment may be indicated as "Node B" and "UE," respectively.

Furthermore, each function block used to explain the above-described embodiments is typically implemented as an LSI constituted by an integrated circuit. These may be individual chips or may partially or totally contained on a single chip.

Here, each function block is described as an LSI, but this may also be referred to as "IC", "system LSI", "super LSI", "ultra LSI" depending on differing extents of integration.

Further, the method of circuit integration is not limited to LSI's, and implementation using dedicated circuitry or general purpose processors is also possible. After LSI manufacture, utilization of a programmable FPGA (Field Programmable Gate Array) or a reconfigurable processor in which connections and settings of circuit cells within an LSI can be reconfigured is also possible.

Further, if integrated circuit technology comes out to replace LSI's as a result of the development of semiconductor technology or a derivative other technology, it is naturally also possible to carry out function block integration using this technology. Application in biotechnology is also possible.

The present application is based on Japanese Patent Application No.2004-323868, filed on November 8, 2004, the entire content of which is expressly incorporated by reference herein.

### Industrial Applicability

The radio transmission apparatus and pilot signal insertion method of the present invention can be applied to apparatuses such as a base station apparatus and mobile station apparatus used in a radio communication system.

## Claims

1. A radio transmission apparatus comprising:
a modulation section that modulates a data signal using a modulation scheme selected from a plurality of modulation schemes;
an insertion section that inserts a pilot signal in the modulated data signal and changes an insertion position of the pilot signal according to the selected modulation scheme; and
a transmission section that transmits the data signal in which the pilot signal is inserted.

2. The radio transmission apparatus according to claim 1, further comprising a generation section that generates information indicating the insertion position of the pilot signal,
wherein the transmission section transmits the generated information.

3. The radio transmission apparatus according to claim 1, wherein the insertion section fixes an insertion position common to a plurality of modulation schemes and changes an insertion position to be changed according to the selected modulation scheme to a position other than the common insertion position.

4. The radio transmission apparatus according to claim 3, wherein the insertion section inserts a common pilot signal in the insertion position common to a plurality of modulation schemes and inserts a dedicated pilot signal in the position other than the common insertion position.

5. The radio transmission apparatus according to claim 4, further comprising a generation section that generates information indicating the insertion position of the dedicated pilot signal,
wherein the transmission section transmits the generated information.

6. A radio reception apparatus comprising:
a reception section that receives a pilot signal whose insertion position in a data signal is changed according to a modulation scheme selected from a plurality of modulation schemes, and information indicating the insertion position of the pilot signal;
a division section that divides the data signal and the pilot signal based on the information indicating the insertion position of the pilot signal; and
a channel estimation section that performs channel estimation using the divided pilot signal.

7. The radio reception apparatus according to claim 6, wherein the reception section receives a common pilot signal inserted in an insertion position common to a plurality of modulation schemes and a dedicated pilot signal inserted in a position other than the common insertion position.

8. The radio reception apparatus according to claim 7, wherein the channel estimation section performs channel estimation using, in addition to a dedicated pilot signal addressed to a station, a dedicated pilot signal addressed to a station other than the station.

9. A pilot signal insertion method comprising the steps of:
inserting a pilot signal in a data signal using a modulation scheme selected from a plurality of modulation schemes; and
changing an insertion position of the pilot signal according to the selected modulation scheme.
